# EUROPEAN PATENT APPLICATION

(11) **EP 4 692 881 A1**
(43) Date of publication of application: **11.02.2026**
(21) Application number: 24795568.5
(22) Date of filing: 23.02.2024
(51) Int. Cl.: G02B 6/44, G02B 6/38, G02B 6/52

(54) **OPTICAL CABLE CONNECTING MODULE, OPTICAL DROP CABLE MODULE, AND OPTICAL CABLE CONNECTING APPARATUS**

(30) Priority: 28.04.2023 CN 202310485733
(71) Applicant: Huawei Technologies Co., Ltd., Shenzhen, Guangdong 518129 (CN)
(72) Inventor: CHENG, Jian, Shenzhen, Guangdong 518129 (CN); LIU, Yanjun, Shenzhen, Guangdong 518129 (CN); XIAO, Wei, Shenzhen, Guangdong 518129 (CN)
(74) Representative: Gill Jennings & Every LLP
(86) International application number: PCT/CN2024/078441
(87) International publication number: WO 2024/222180

(57) **Abstract**

An optical cable connection module (10), a drop cable module (20), and an optical cable connection apparatus are provided. The optical cable connection module (10) includes a fiber distribution box (1) and an air-blown cable (2). The fiber distribution box (1) includes a housing (11) and a connection assembly (12). The connection assembly (12) is fastened to the housing (11) and is exposed from the housing (11). The connection assembly (12) may be configured to connect to a user-side optical cable. One end of the air-blown cable (2) is in the housing (11) and is connected to the connection assembly (12), and the other end of the air-blown cable (2) extends out of the housing (11) to connect to a fiber distribution terminal (01). The optical cable connection module (10) integrates the air-blown cable (2) and the fiber distribution box (1), so that fiber splicing and distribution processes on the air-blown cable (2) and the fiber distribution box (1) are not required, thereby simplifying a process, shortening construction duration, and reducing construction costs.

## Description

### CROSS-REFERENCE TO RELATED APPLICATIONS

This application claims priority to Chinese Patent Application No. 202310485733.8, filed with the China National Intellectual Property Administration on April 28, 2023 and entitled "OPTICAL CABLE CONNECTION MODULE, DROP CABLE MODULE, AND OPTICAL CABLE CONNECTION APPARATUS", which is incorporated herein by reference in its entirety.

### TECHNICAL FIELD

This application relates to the field of optical fiber transmission technologies, and in particular, to an optical cable connection module, a drop cable module, and an optical cable connection apparatus.

### BACKGROUND

An optical distribution network (optical distribution network, ODN) is used to provide an optical transmission channel between an optical line terminal (optical line terminal, OLT) and an optical network unit (optical network unit). In a conventional technology, an optical cable is deployed between an operator and a terminal customer in a buried and air-blown manner. An air-blown optical cable is laid with features of low resource occupation, quick deployment, and easy capacity expansion.

Currently, during laying of an air-blown optical fiber network, laying of the air-blown optical cable and mounting of a fiber distribution box are separately performed, and then fiber splicing and distribution operations on the air-blown optical cable and the fiber distribution box are performed, to form a complete link network. In this mounting manner, mounting and construction are difficult and costly, and there is a risk of foreign object invasion.

### SUMMARY

This application provides an optical cable connection module, a drop cable module, and an optical cable connection apparatus, to simplify an optical cable laying construction process, improve construction efficiency, and further reduce construction costs.

According to a first aspect, this application provides an optical cable connection module. The optical cable connection module may be used in construction of laying a fiber optic network in a buried air-blown manner. The optical cable connection module includes a fiber distribution box and an air-blown cable. The fiber distribution box includes a housing and a connection assembly. The connection assembly is fastened to the housing and is exposed from the housing. The connection assembly may be configured to connect to a user-side optical cable. One end of the air-blown cable is in the housing and is connected to the connection assembly, and the other end of the air-blown cable extends out of the housing to connect to a fiber distribution terminal. During construction, a blind via channel extending to a private area may be excavated from a public area. After the air-blown cable is air-blown to the fiber distribution terminal to be connected to the fiber distribution terminal, the optical cable connection module is placed at a tail end of the blind via channel. A position at which the blind via channel is excavated is backfilled, to pre-bury the optical cable connection module. When a drop cable is to be connected, a blind via channel may be directly excavated in the private area to expose the optical cable connection module, and the drop cable is connected to the connection assembly of the optical cable connection module, to implement quick connection of the drop cable.

The optical cable connection module integrates the air-blown cable and the fiber distribution box, so that fiber splicing and distribution processes on the air-blown cable and the fiber distribution box are not required, thereby simplifying a process. In an optical cable construction phase, connection to the fiber distribution terminal may be implemented in an air-blown manner, and in this phase, only the public area may be excavated to bury the optical cable connection module, so that construction duration is shortened, and construction costs can be reduced. In an optical cable connection phase, only the private area may be excavated to connect the user-side optical cable to the fiber distribution box, to complete optical cable home connection. When right of way application is involved during optical cable routing, a quantity of right of way applications can be reduced, and a waiting period during a plurality of right of way applications can be avoided, thereby improving construction efficiency and reducing construction costs.

The connection assembly is configured to connect to the user-side optical cable. The connection assembly may be specifically a connector. To be specific, the connection assembly may be an SC connector, an LC connector, a dual-LC connector, or an multi-fiber push on (MPO) connector. Alternatively, the connection assembly may include a connector and an adapter, that is, the connector and the adapter are combined to form the connection assembly. Specifically, the connector connects the air-blown cable and the adapter, and the adapter is configured to connect to the user-side optical cable. The connector or the combination of the connector and the adapter is used, so that the optical cable connection module can be quickly connected to the user-side optical cable. The connection assembly may alternatively be connected to the user-side optical cable by directly connecting a male connector and a female connector of connectors.

The optical cable connection module may be separately connected to the fiber distribution terminal and the user-side cable in different phases of optical cable laying. To facilitate optical cable connection, a first connection compartment and a second connection compartment are formed in the fiber distribution box of the optical cable connection module. The connection assembly has a first connection terminal in the first connection compartment and a second connection terminal in the second connection compartment. The first connection terminal may be connected to the air-blown cable in the first connection compartment, and the second connection terminal may be connected to the user-side optical cable in the second connection compartment. During manufacturing of the optical cable connection module or before the optical cable construction phase, the first connection compartment may be opened, to perform fiber splicing and distribution on the air-blown cable and the first connection terminal of the connection assembly, so as to implement assembly between the air-blown cable and the fiber distribution box. In the optical cable connection phase, the second connection compartment may be opened, to connect the user-side optical cable to the second connection terminal of the connection assembly, so as to implement quick home connection. It should be understood that the first connection compartment and the second connection compartment are merely functional area division of the fiber distribution box, and specific structures of the compartments are not limited. In some possible implementations, the housing may include an outer casing and an inner cylinder disposed in the outer casing. The inner cylinder is partially fastened inside the outer casing, so that the inner cylinder has a first part inside the outer casing and a second part outside the outer casing. The inner cylinder may be mounted in the outer casing through threaded connection or buckle connection. The first connection compartment is formed between the first part of the inner cylinder and the outer casing. The connection assembly is fastened to the inner cylinder, and the first connection terminal of the connection assembly extends between the inner cylinder and the outer casing. The connection assembly is fastened to the inner cylinder, and the air-blown cable may extend to the first connection compartment formed between the first part of the inner cylinder and the outer casing, and is connected to the connection assembly in the first connection compartment. During manufacturing of the optical cable connection module or during optical cable construction, the first connection compartment may be opened, to connect the air-blown cable to the first connection terminal of the connection assembly.

A structure of the air-blown cable outside the housing includes a bare core and a protective layer wrapped outside the bare core, and a structure of the air-blown cable inside the inner cylinder is the bare core from which the protective layer is stripped. The bare core of the air-blown cable is connected to the connection assembly. There is a fiber spool area in the inner cylinder, and the bare core of the air-blown cable may be spooled in the fiber spool area.

When the optical cable connection module is buried underground, a protective cap may be further disposed on the fiber distribution box, to protect the connection assembly. The protective cap is detachably connected to an end of the housing at which the connection assembly is disposed. When the protective cap is connected to the housing, it may be considered that the second connection compartment is formed between the protective cap and the housing. When the protective cap is connected to the housing, the second connection terminal of the connection assembly can be enclosed in the second connection compartment, so that a foreign object in the external environment does not invade the connection assembly. When the optical cable connection module is connected to the user-side optical cable, the protective cap may be detached, and the second connection compartment may be opened, to connect the user-side optical cable to the second connection terminal of the connection assembly.

To improve sealing performance of fastening between the protective cap and the housing, a sealing member is disposed between the housing and the protective cap. The sealing member may be specifically of a structure like a rubber ring or a silicone ring.

In a possible implementation, the optical cable connection module is further provided with a connection tube. Specifically, the connection tube is provided outside the housing and is sleeved on the air-blown cable. After the air-blown cable is connected to the fiber distribution terminal in the air-blown manner, the connection tube may be connected to an air-blown tube to protect the air-blown cable.

When the fiber distribution box is connected to the user-side optical cable, the housing may fit with the user-side optical cable to limit the user-side optical cable, so that the user-side optical cable is not detached from the fiber distribution box. In a possible implementation, a first limiting member and a second limiting member are disposed at an end that is of the inner cylinder and that faces the user-side optical cable. When the connection assembly is connected to the user-side optical cable, the first limiting member is configured to fit with the user-side optical cable to circumferentially limit the user-side optical cable, and the second limiting member is configured to fit with the user-side optical cable to axially limit the user-side optical cable. Certainly, specific structures of the first limiting member and the second limiting member need to match a structure of the user-side optical cable to implement a limiting function.

According to a second aspect, this application provides a drop cable module. The drop cable module may be connected to a fiber distribution terminal through a fiber distribution box. Specifically, the drop cable module includes a drop cable, and a connection head and a wiring terminal that are disposed at two ends of the drop cable. The connection head may be connected to the fiber distribution terminal through the fiber distribution box, and the wiring terminal is configured to connect to an access terminal box on a user side. In an optical cable connection phase, a pre-buried optical cable connection module is connected to the access terminal box in a user residence through the drop cable module, to implement quick optical cable home connection.

In a possible implementation, the drop cable module further includes a protective cylinder. The protective cylinder is movably sleeved outside the connection head. When the connection head is connected to the fiber distribution terminal through the fiber distribution box, the protective cylinder is connected to the fiber distribution box through fitting, to protect a connection structure of the connection head.

Limiting between the fiber distribution box and the protective cylinder may be implemented through a limiting structure, to reduce a risk that the connection head is detached from the fiber distribution box. Specifically, a first limiting member and a second limiting member are disposed on the fiber distribution box, and a first limiting part and a second limiting part are disposed in the protective cylinder. When the connection head is connected to the fiber distribution box through fitting, between the fiber distribution box and the protective cylinder, the protective cylinder is circumferentially limited through fitting between the first limiting member and the first limiting part, and the protective cylinder is axially limited through fitting between the second limiting member and the second limiting part.

In a possible implementation, the first limiting member is of a cantilever structure and extends in a circumferential direction of the fiber distribution box. The first limiting member has a fixed end and a free end. The fixed end is fastened to the fiber distribution box, and the free end is suspended. The free end of the first limiting member may be offset relative to the fixed end. A first limiting protrusion protruding from an outer surface of the fiber distribution box is disposed at the free end of the first limiting member, a limiting notch is formed between the fixed end of the first limiting member and the first limiting protrusion, and a first inclined surface is formed on a side that is of the first limiting protrusion and that faces away from the limiting notch. Based on a structure of the first limiting member, the first limiting part includes a second limiting protrusion, and the second limiting protrusion is disposed on an inner surface of the protective cylinder. When the first limiting part fits with the first limiting member for limiting, the protective cylinder is sleeved on the outer surface of the fiber distribution box, and a force is applied to the protective cylinder, to cause the protective cylinder to circumferentially rotate relative to the fiber distribution box in a first direction, and the second limiting protrusion to abut against the first inclined surface of the first limiting protrusion and slide toward the limiting notch along the first inclined surface, so that the second limiting protrusion finally enters the limiting notch. In this case, rotation of the protective cylinder is stopped, and the limiting notch can limit the second limiting protrusion under no force, so that the protective cylinder is not detached from the fiber distribution box in the circumferential direction, to circumferentially limit the protective cylinder.

Possibly, a second inclined surface is formed on a side that is of the first limiting protrusion and that faces the limiting notch. When limiting between the first limiting part and the first limiting member is released, a force is applied to the protective cylinder, to cause the protective cylinder to circumferentially rotate relative to the fiber distribution box in a second direction, and the second limiting protrusion to abut against the second inclined surface of the first limiting protrusion and slide in a direction away from the limiting notch to move out of the limiting notch, to release limiting between the first limiting member and the first limiting part, that is, release circumferential limiting on the protective cylinder. The second direction is opposite to the first direction.

In a possible implementation, the second limiting member includes a limiting slot on the outer surface of the fiber distribution box, and the limiting slot extends in the circumferential direction of the fiber distribution box. The second limiting part includes a limiting bump, and the limiting bump is disposed on the inner surface of the protective cylinder. When the second limiting part fits with the second limiting member for limiting, the protective cylinder is sleeved outside the fiber distribution box. A force is applied to the protective cylinder to cause the protective cylinder to circumferentially rotate relative to the fiber distribution box in the first direction, so that the limiting bump can slide into the limiting slot. In this case, the limiting slot can prevent the limiting bump from moving in an axial direction of the protective cylinder, to axially limit the protective cylinder. When limiting between the second limiting member and the second limiting part is released, the limiting bump may move out of the limiting slot by rotating the protective cylinder in the second direction.

According to a third aspect, an embodiment of this application provides an optical cable connection apparatus. The optical cable connection apparatus may include the optical cable connection module according to the first aspect and the drop cable module according to the second aspect. The optical cable connection module and the drop cable module cooperate to implement optical cable connection between a fiber distribution terminal and an access terminal box of a user.

### BRIEF DESCRIPTION OF DRAWINGS

FIG. 1 is a diagram of a construction principle of a buried and air-blown optical cable in a conventional technology;
FIG. 2a is a diagram of a construction principle of an optical cable construction phase in a conventional technology;
FIG. 2b is a diagram of a construction principle of an optical cable connection phase in a conventional technology;
FIG. 3 is a diagram of a structure of an optical cable connection module according to an embodiment of this application;
FIG. 4 is a diagram of a structure of an optical cable connection module according to an embodiment of this application;
FIG. 5a is an exploded view of a housing of an optical cable connection module according to an embodiment of this application;
FIG. 5b is a diagram of a structure in which a connection assembly of an optical cable connection module is mounted to a housing according to an embodiment of this application;
FIG. 6a is an exploded view of a housing of an optical cable connection module according to an embodiment of this application;
FIG. 6b is a diagram of a structure of an inner cylinder of an optical cable connection module according to an embodiment of this application;
FIG. 6c is a diagram of a structure in which an air-blown cable of an optical cable connection module is connected to an inner cylinder according to an embodiment of this application;
FIG. 7 is a diagram of a structure of an optical cable connection module according to an embodiment of this application;
FIG. 8 is a diagram of a structure of connection between an optical cable connection module and an air-blown main tube according to an embodiment of this application;
FIG. 9a is a diagram of a construction principle of connecting an optical cable connection module to a fiber distribution terminal in an optical cable construction phase according to an embodiment of this application;
FIG. 9b is a diagram of a construction principle of burying an optical cable connection module under a private road in an optical cable construction phase according to an embodiment of this application;
FIG. 9c is a diagram of a construction principle of an optical cable connection module in an optical cable connection phase according to an embodiment of this application;
FIG. 9d is a diagram of a construction principle of an optical cable connection module according to an embodiment of this application;
FIG. 10 is a diagram of a structure of a drop cable module according to an embodiment of this application;
FIG. 11 is a diagram of a partial structure of a drop cable module according to an embodiment of this application;
FIG. 12a is a diagram of a structure of connection between a drop cable module and an optical cable connection module according to an embodiment of this application;
FIG. 12b is a diagram of a structure of connection between a drop cable module and an optical cable connection module according to an embodiment of this application;
FIG. 12c is a diagram of a structure of connection between a drop cable module and an optical cable connection module according to an embodiment of this application;
FIG. 12d is a diagram of a construction principle of connecting an optical cable connection module to a drop cable module in an optical cable connection phase according to an embodiment of this application;
FIG. 13a is a diagram of a partial structure of an inner cylinder of an optical cable connection module according to an embodiment of this application;
FIG. 13b is a sectional view of a partial structure of an inner cylinder of an optical cable connection module according to an embodiment of this application;
FIG. 14a is a diagram of a structure of a protective cylinder of a drop cable module according to an embodiment of this application;
FIG. 14b is a sectional view of a partial structure of a protective cylinder of a drop cable module according to an embodiment of this application;
FIG. 15a is a diagram of fitting for connection between an optical cable connection module and a drop cable module according to an embodiment of this application;
FIG. 15b is a diagram of fitting for connection between an optical cable connection module and a drop cable module according to an embodiment of this application;
FIG. 15c is a diagram of fitting for connection between an optical cable connection module and a drop cable module according to an embodiment of this application;
FIG. 15d is a diagram of fitting for connection between an optical cable connection module and a drop cable module according to an embodiment of this application; and
FIG. 16 is a diagram of fitting for connection between a second connecting piece of an optical cable connection module and a second connection end of a drop cable module according to an embodiment of this application.

Reference numerals: 01-fiber distribution terminal; 02-user residence; 03-air-blown machine; 04-micro cable; 05-fiber connection box; 06-boundary marker; 10-optical cable connection module; 20-drop cable module; 1-fiber distribution box; 11-housing; 111-outer casing; 112-inner cylinder; 11201-first part; 11202-second part; 1121-connection end; 11211-first limiting member; 11212-second limiting member; 1122-annular boss; 1123-mechanical part; 1124-matching end; 1125-annular groove; 12-connection assembly; 121-first connection terminal; 122-second connection terminal; 13-protective cap; 14-sealing member; 2-air-blown cable; 21-bare core; 22-protective layer; 3-connection tube; 4-air-blown main tube; 41-air-blown sub-tube; 5-connection joint; 201-drop cable; 202-connection head; 203-wiring terminal; 204-protective cylinder; 2041-first limiting part; and 2042-second limiting part.

### DESCRIPTION OF EMBODIMENTS

During construction of an optical distribution network, an operator builds a dedicated central equipment room in an area with a specific range to provide network input for the area, disposes a fiber distribution terminal (fiber distribution terminal, FDT) in a residential compound or along a street for managing an optical cable in the residential compound or the street, and disposes, in a corridor in which a user is located, a fiber access terminal (fiber access terminal, FAT) for managing an optical cable in the corridor. A distribution optical cable is led out from the central equipment room, and sequentially passes through the fiber distribution terminal in the residential compound or the street and the fiber access terminal in the corridor. When a service needs to be provisioned at a user end, an access terminal box (access terminal box, ATB) is disposed in a user residence, and the optical cable of the fiber access terminal in the corridor is connected to a drop cable in the user residence, so that optical cable deployment between the operator and the terminal customer is performed.

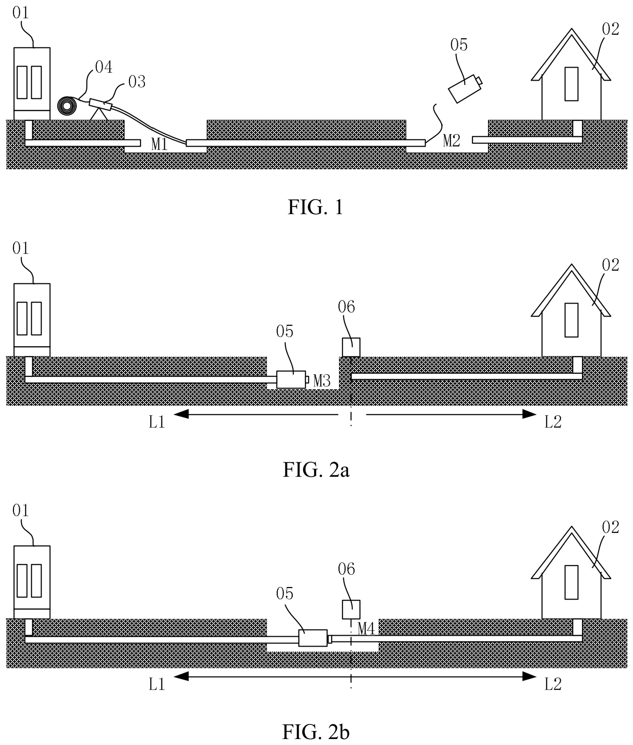

A buried and air-blown manner is common in optical cable laying. FIG. 1 shows a scenario of conventional air-blown optical cable construction. A burial pit M1 and a burial pit M2 are separately excavated between a fiber distribution terminal 01 and a user residence 02. An air-blown machine 03 is used to extend a micro cable 04 from the burial pit M1 to the burial pit M2. Fiber splicing and distribution are performed on an optical cable connection box 05 and the micro cable 04 at the burial pit M2. The micro cable 04 in the burial pit M1 is connected to the fiber distribution terminal 01, the fiber connection box 05 is connected to an access terminal box in the user residence 02, and the burial pit M1 and the burial pit M2 are backfilled, to complete optical cable laying between the fiber distribution terminal 01 and the user residence 02. Laying operation of the micro cable 04 and mounting operation of the fiber connection box 05 are performed separately, and on-site fiber splicing and distribution operations need to be performed. Consequently, an on-site construction environment is poor. The fiber splicing takes long operation time, and it is likely that a foreign object is introduced during the operation, resulting in high costs and a high reliability risk.

FIG. 2a and FIG. 2b show construction manners of laying an optical cable in an air-blown manner. Because a public right of way is strictly distinguished from a private right of way, an entire optical cable laying project includes an optical cable construction (home pass, HP) phase and an optical cable connection (home connection, HC) phase. There is a shutdown period between the two construction phases. As shown in FIG. 2a, a public road L1 is divided from a private road L2 by using a boundary marker 06. In the optical cable construction phase, a construction party applies for a right of way of the public road L1, excavates a burial pit M3 at a position that is on the public road L1 and that is close to the private road L2, and extends the micro cable 04 from the fiber distribution terminal 01 to the burial pit M3 in an air-blown laying manner. Fiber splicing and distribution are performed on the micro cable 04 and the optical cable connection box at the burial pit M3, and then the optical cable connection box is buried in the burial pit M3. In the optical cable connection phase after the optical cable construction is complete for a period of time, the construction party needs to apply for both the right of way of the public road L1 and the right of way of the private road L2 to excavate a burial hole M4. The burial hole M4 includes space occupied by the burial pit M3, and the burial hole M4 is partially on the public road L1 and partially on the private road L2. The optical cable connection box is taken out from the burial hole M4, and undergoes fiber splicing or distribution with a drop cable in the user residence 02. Then, the burial hole M4 is backfilled. In such an optical cable laying manner, a plurality of right of way applications and secondary excavation are required in an entire construction process, resulting in low construction efficiency and high costs.

In view of this, embodiments of this application provide an optical cable connection module, a drop cable module, and an optical cable connection apparatus. The optical cable connection module integrates a fiber distribution box and an air-blown cable, so that an on-site fiber splicing operation is not required, difficulty in construction can be degraded, and operation efficiency can be improved. When right of way application is involved, simplifying a right of way application procedure can improve construction efficiency.

To make the objectives, technical solutions, and advantages of this application clearer, the following further describes this application in detail with reference to the accompanying drawings.

The terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

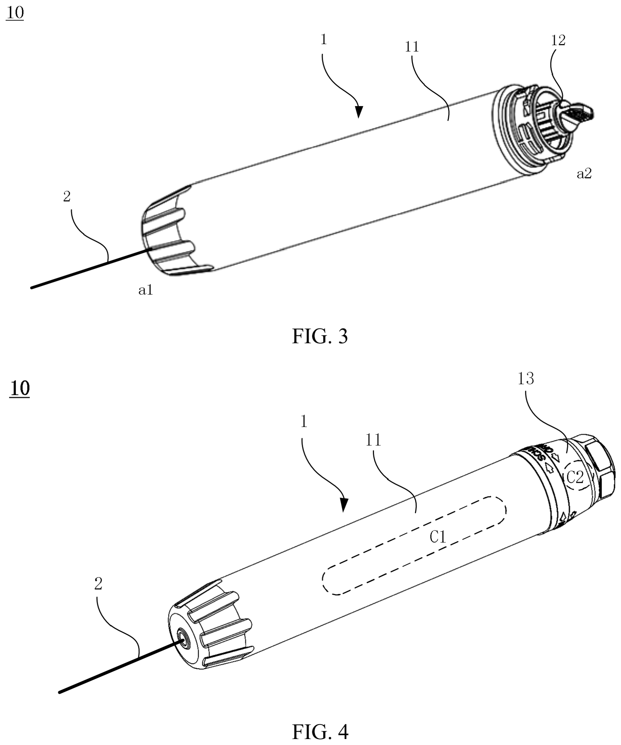

An optical cable connection module 10 shown in FIG. 3 includes a fiber distribution box 1 and an air-blown cable 2. The air-blown cable 2 is integrated into the fiber distribution box 1, so that fiber splicing and distribution on the air-blown cable 2 and the fiber distribution box 1 are not required.

For example, the fiber distribution box 1 is in a cylinder-like shape, and the fiber distribution box 1 has a first end a1 and a second end a2 in a length direction of the fiber distribution box 1 The fiber distribution box 1 may specifically include a housing 11 and a connection assembly 12. The connection assembly 12 may be fastened to the second end a2 of the housing 11. The air-blown cable 2 is fastened to the fiber distribution box 1. One end of the air-blown cable 2 is connected to the connection assembly 12, and the other end of the air-blown cable 2 extends out of the first end a1 of the fiber distribution box 1. It should be understood that, the air-blown cable 2 and the connection assembly 12 may be respectively located at two ends of the fiber distribution box 1 as shown in FIG. 3, or may be located at a same end of the fiber distribution box 1. Certainly, there may be another layout manner. This is not limited in this application.

During optical cable construction, in an optical cable connection construction process, the air-blown cable 2 may be connected to a fiber distribution terminal 01 in a buried and air-blown manner, and the connection assembly 12 may be configured to connect to an access terminal box of a user. A type of the connection assembly 12 is not limited, and may be specifically a connector, for example, an SC connector, an LC connector, a dual-LC connector, or an MPO connector. The connection assembly 12 may alternatively be a combination of a connector and an adapter. The connector connects the air-blown cable 2 and the adapter, and the adapter is configured to connect to a user-side optical cable. The connector or the combination of the connector and the adapter is used, so that the optical cable connection module 10 can be quickly connected to the user-side optical cable. The connection assembly 12 may alternatively be connected to the user-side optical cable by directly connecting a male connector and a female connector of connectors.

When the optical cable connection module 10 is not connected to a drop cable, the connection assembly 12 is exposed. To protect the connection assembly 12, as shown in FIG. 4, a protective cap 13 may be further disposed at the second end a2 of the housing 11. The protective cap 13 is detachably connected to the second end a2 of the housing 11 and covers the connection assembly 12. As shown in FIG. 4, after the protective cap 13 is connected to the housing 11, the connection assembly 12 is hidden.

When the protective cap 13 is connected to the second end a2 of the housing 11, the connection assembly 12 is enclosed by the housing 11 and the protective cap 13. In this case, when the optical cable connection module 10 is buried underground, the connection assembly 12 is not contaminated or damaged, and no foreign object invades the connection assembly 12 or the housing 11, to degrade difficulty in maintenance. When the protective cap 13 is detached from the second end a2 of the housing 11, the connection assembly 12 is exposed. In this case, the connection assembly 12 may be connected to the user-side optical cable. For example, the detachable connection between the protective cap 13 and the housing 11 may be implemented through threaded connection, buckle connection, or the like. These connection manners have advantages of quick mounting and detachment and can implement quick connection between the connection assembly 12 and the user-side optical cable.

Still refer to FIG. 4. It may be considered that a first connection compartment C1 and a second connection compartment C2 are formed in the fiber distribution box 1 of the optical cable connection module 10 provided in embodiments of this application. Two dashed-line areas are used to represent the first connection compartment C1 and the second connection compartment C2 respectively. For example, the first connection compartment C1 is formed in the housing 11, and the second connection compartment C2 is formed between the protective cap 13 and the housing 11. The connection assembly 12 is connected to the air-blown cable 2 in an area in which the first connection compartment C1 is located, and the connection assembly 12 is connected to the user-side optical cable in an area in which the second connection compartment C2 is located. Specifically, during manufacturing of the optical cable connection module 10 or in an optical cable construction phase, the first connection compartment C1 may be opened, to connect the air-blown cable 2 to the connection assembly 12. In an optical cable connection phase, the second connection compartment C2 may be opened, to connect the user-side optical cable to the connection assembly 12. In other words, the optical cable connection module 10 provided in embodiments of this application can implement a structural compartment-specific design in different construction phases of optical cable laying, to further improve construction efficiency. It should be understood that the first connection compartment C1 and the second connection compartment C2 are merely functional area division of the fiber distribution box 1, and specific structures of the compartments are not limited.

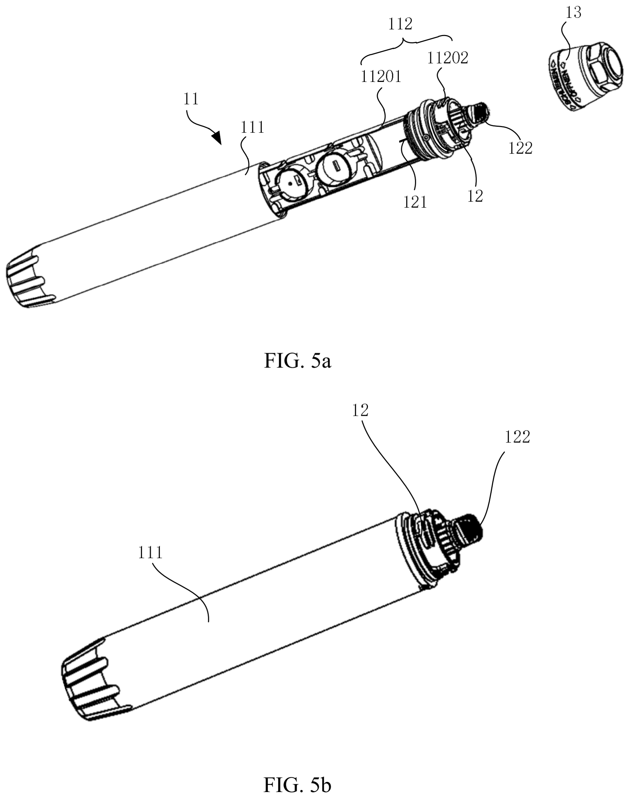

A structure in which the fiber distribution box 1 includes the protective cap 13 is used as an example. FIG. 5a shows an exploded view of the housing 11. As shown in FIG. 5a, the housing 11 of the fiber distribution box 1 includes an outer casing 111 and an inner cylinder 112. The outer casing 111 is hollow, and the inner cylinder 112 is partially fastened inside the outer casing 111. The connection assembly 12 is fastened to the inner cylinder 112, and the connection assembly 12 has a first connection terminal 121 and a second connection terminal 122. The first connection terminal 121 is configured to connect to the air-blown cable, and the second connection terminal 122 is configured to connect to the user-side optical cable. For the inner cylinder 112 being partially fastened inside the outer casing 111, refer to a structure shown in FIG. 5b. Refer to FIG. 5a and FIG. 5b together. The inner cylinder 112 has a first part 11201 inside the outer casing 111 and a second part 11202 outside the outer casing 111. The first part 11201 of the inner cylinder 112 can fit with the outer casing 111 to form the first connection compartment C1, and the second part 11202 of the inner cylinder 112 can fit with the protective cap 13 to form the second connection compartment C2. The first connection terminal 121 of the connection assembly 12 is in the first connection compartment C1, and the second connection terminal 122 is in the second connection compartment C2.

During manufacturing of the optical cable connection module or in the optical cable construction phase, the outer casing 111 and the inner cylinder 112 may be opened to open the first connection compartment C1, so that the air-blown cable is connected to the first connection terminal 121 of the connection assembly 12. In the optical cable connection phase, the protective cap 13 may be detached from the housing 11 to open the second connection compartment C2, so that the user-side optical cable is connected to the second connection terminal 122 of the connection assembly 12.

To ensure structural stability, the inner cylinder 112 may be fastened inside the outer casing 111 through buckle connection, screw connection, or the like. A fiber spool area P is disposed in the inner cylinder 112. When the inner cylinder 112 is fastened inside the outer casing 111, sealing protection can be provided for the fiber spool area P between the inner cylinder 112 and the outer casing 111. When the air-blown cable 2 is fastened to the housing 11, the air-blown cable 2 may enter the inner cylinder 112 to be connected to the connection assembly 12.

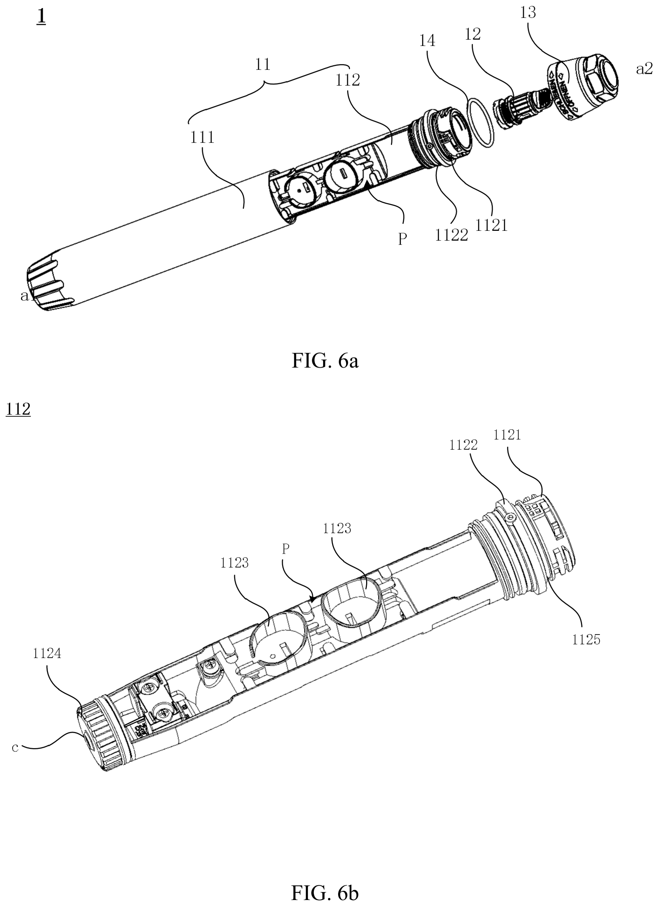

The protective cap 13 is detachably connected to the inner cylinder 112. As shown in FIG. 6a, one end that is of the inner cylinder 112 and that faces the protective cap 13 has a connection end 1121. It may be considered that the connection end 1121 is a partial structure of the second part 11202 of the inner cylinder 112. The connection assembly 12 may be mounted and fastened to the connection end 1121, and the protective cap 13 may be connected to the connection end 1121 through buckle connection or threaded connection to protect the connection assembly 12. Specifically, the protective cap 13 may be connected to the connection end 1121 in a circumferential direction of the inner cylinder 112, so that the connection assembly 12 is enclosed between the protective cap 13 and the inner cylinder 112, to protect the connection assembly 12. An annular boss 1122 is disposed at the end that is of the inner cylinder 112 and that faces the protective cap 13. When the protective cap 13 is connected to the inner cylinder 112, the protective cap 13 may abut against the annular boss 1122. With reference to FIG. 4 and FIG. 6a, when the outer casing 111, the inner cylinder 112, and the protective cap 13 are connected, in a circumferential direction of the fiber distribution box 1, an outer surface of the outer casing 111, the top of the annular boss 1122, and an outer surface on a side that is of the protective cap 13 and that faces the housing 11 may be almost flush, so that an outer surface of the fiber distribution box 1 is more concise and esthetically pleasing. To enable the protective cap 13 to be more securely connected to the connection end 1121, a sealing member 14 may be further disposed between the protective cap 13 and the connection end 1121. After the protective cap 13 is connected to the connection end 1121, space with better sealing performance can be formed. This can better protect the connection assembly 12. The sealing member 14 may be specifically a rubber ring or a silicone ring.

With reference to FIG. 6a, still refer to a structure of the inner cylinder 112 shown in FIG. 6b. In a length direction of the inner cylinder 112, the connection end 1121 is located at one end of the inner cylinder 112, and the inner cylinder 112 has a matching end 1124 at the other end that is of the inner cylinder 112 and that is away from the connection end 1121. When the inner cylinder 112 is disposed inside the outer casing 111, the matching end 1124 abuts against an inner wall of the first end a1 of the outer casing 111. It can be learned from FIG. 6b that a threading hole c is provided at the matching end 1124 of the inner cylinder 112. A mechanical part 1123 for spooling an optical fiber is disposed in the fiber spool area P between the connection end 1121 and the matching end 1124. A quantity, a shape, and an arrangement manner of mechanical parts 1123 are not limited. For example, two ring-like mechanical parts 1123 are disposed, and the two mechanical parts 1123 are arranged in the length direction of the inner cylinder 112. The connection end 1121 is on a side that is of the annular boss 1122 and that faces away from the fiber spool area P. An annular groove 1125 between the connection end 1121 and the annular boss 1122 is further provided in the inner cylinder 112, and the sealing member 14 may be accommodated in the annular groove 1125.

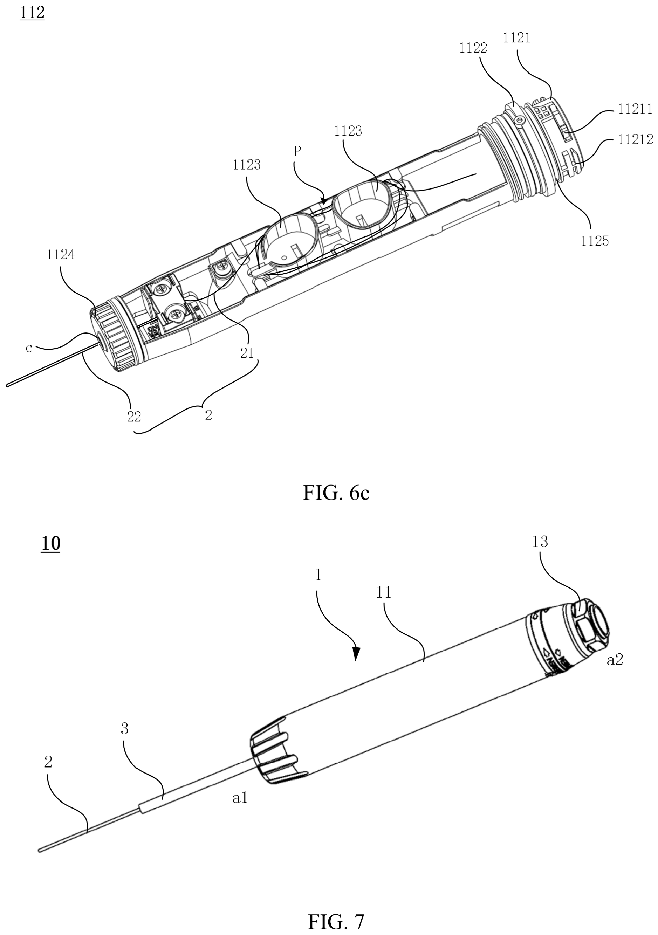

Further, with reference to FIG. 6c, when the air-blown cable 2 is mounted to the inner cylinder 112, the air-blown cable 2 includes a bare core 21 and a protective layer 22 wrapped on an outer surface of the bare core 21. A part of the air-blown cable 2 for connecting to the connection assembly 12 is the bare core 21 from which the protective layer 22 is stripped. The bare core 21 from which the protective layer 22 is stripped may be spooled onto the mechanical parts 1123 in the fiber spool area P. The air-blown cable 2 passes through the threading hole c of the inner cylinder 112 to enter the inner cylinder 112. The protective layer 22 in the air-blown cable 2 in the inner cylinder 112 is stripped, and the bare core 21 is spooled onto the mechanical parts 1123 in the fiber spool area P for accommodation and extends to one end of the connection end 1121 of the inner cylinder 112. After the connection assembly 12 is mounted to the inner cylinder 112, in the inner cylinder 112, the connection assembly 12 is connected to an end that is of the bare core 21 and that is away from the matching end 1122.

During optical cable laying construction, the air-blown cable 2 may be connected to the fiber distribution terminal 01 in an air-blown manner. In some embodiments, as shown in FIG. 7, the optical cable connection module 10 provided in embodiments of this application further includes a connection tube 3. The connection tube 3 is provided outside the fiber distribution box 1, and an end of the connection tube 3 is fastened to the first end a1 of the housing 11 and is sleeved on the air-blown cable 2.

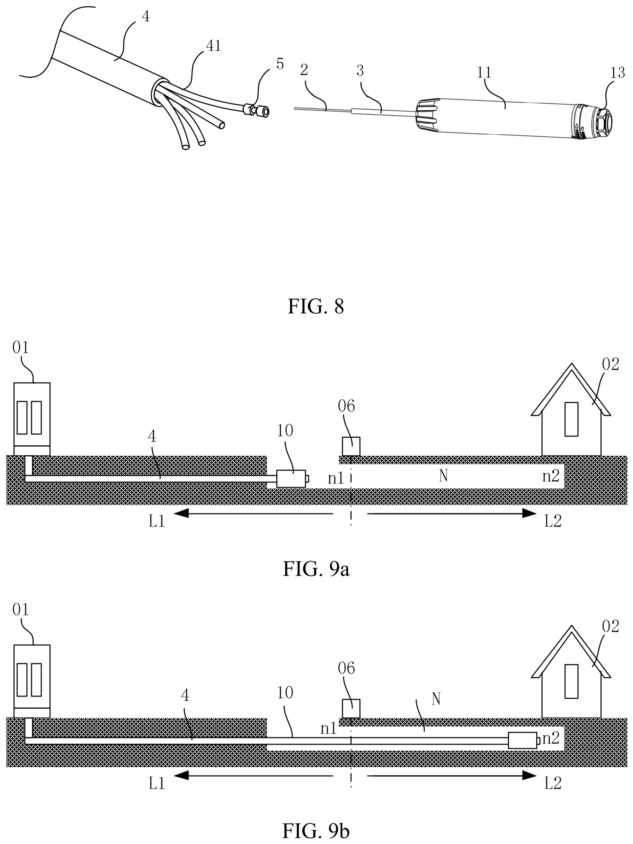

As shown in FIG. 8, when an air-blown operation is performed on the air-blown cable 2, an air-blown main tube 4 is provided, and the air-blown cable 2 is transported to the fiber distribution terminal through the air-blown main tube 4. For example, the air-blown main tube 4 has a plurality of air-blown sub-tubes 41. When operating, each air-blown sub-tube 41 may be configured to connect to one optical cable connection module 10. As shown in FIG. 8, a connection joint 5 is disposed at an end of one of the air-blown sub-tubes 41. The connection joint 5 has two ends, where one end is connected to the air-blown sub-tube 41, and the other end is configured to connect to the connection tube 3 of the optical cable connection module 10. After the air-blown cable 2 is air-blown to the fiber distribution terminal 01 through the air-blown sub-tube 41, the connection tube 3 may be connected to the connection joint 5, to provide sealing protection for the air-blown cable 2. It should be understood that the connection tube 3 may also be replaced with the connection joint 5. To be specific, the connection joint 5 is fastened to the fiber distribution box 1, so that the fiber distribution box 1 is directly connected to the air-blown sub-tube 41 through the connection joint 5.

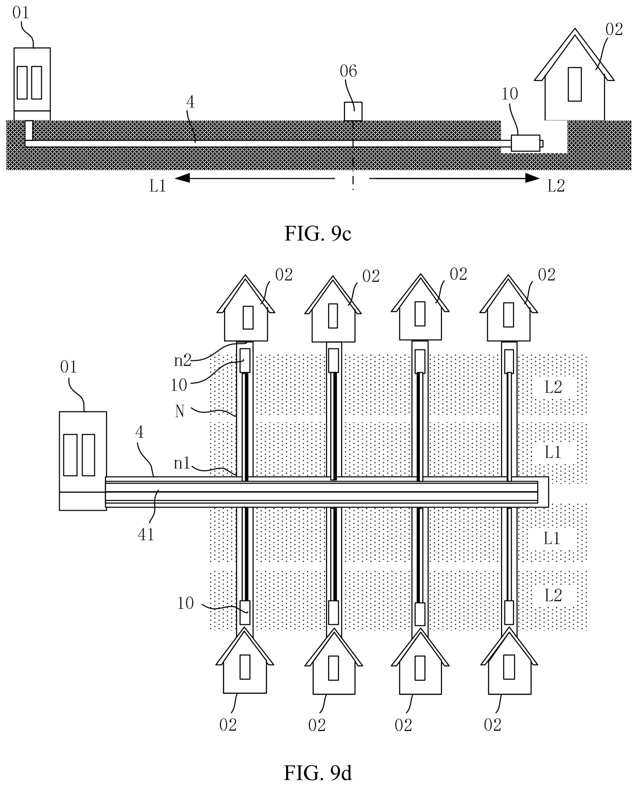

With reference to FIG. 8, refer to a diagram of an optical cable laying scenario shown in FIG. 9a. A road area between the fiber distribution terminal 01 and a user residence 02 includes a public road L1 and a private road L2, and a boundary between the public road L1 and the private road L2 may be illustrated by using a boundary marker 06. In the optical cable construction phase, excavation may be performed at a position that is on the public road L1 and that is close to the private road L2, and the excavation extends toward the private road L2 and ends near the private residence, to form a blind via channel N. The blind via channel N has a head end n1 on the public road L1 and a tail end n2 on the private road L2, where the head end n1 is the position at which the blind via channel N starts to be excavated. The optical cable connection module 10 is located at the head end n1 of the blind via channel N, and the air-blown cable 2 is blown into the air-blown main tube 4 in an air-blown manner, and is connected to the fiber distribution terminal 01, to complete connection between the optical cable connection module 10 and the fiber distribution terminal 01. Then, as shown in FIG. 9b, the optical cable connection module 10 may be transported to the tail end n2 of the blind via channel N, the blind via channel N is backfilled, and the optical cable connection module 10 is buried under the private road L2. It should be understood that, when the optical cable connection module 10 is buried underground, the protective cap 13 may protect the connection assembly 12, so that a foreign object does not invade the connection assembly 12. As shown in FIG. 9c, in the optical cable connection phase, the private road L2 is excavated to a position of the optical cable connection module 10, so that an optical cable in the user residence 02 can be connected to the optical cable connection module 10. FIG. 9d is an example of a diagram of optical cable laying between one fiber distribution terminal 01 and a plurality of corresponding user residences 02. An air-blown main tube 4 is led out from the fiber distribution terminal 01, and the air-blown main tube 4 includes a plurality of air-blown sub-tubes 41. A blind via channel N is excavated to each user residence 02 in a laying direction of the air-blown main tube 4. A head end n1 of each blind via channel N is located at a position on a public road L1 and corresponds to a position of the air-blown main tube 4, and a tail end n2 of each blind via channel N is located at a position on a private road L2 and corresponds to the user residence 02. In the optical cable construction phase, the optical cable connection module 10 may be pre-buried at the tail end n2 of each blind via channel N in the foregoing construction manner. In the optical cable connection phase, excavation is performed at the tail end n2 of the blind via channel N to expose the optical cable connection module 10, and the optical cable connection module 10 is connected to an optical cable in the user residence 02, to complete optical cable home connection.

In the entire optical cable laying construction process, fiber splicing and distribution do not need to be performed on the air-blown cable 2 and the fiber distribution box 1 on site. This reduces construction workload. In the optical cable construction phase and the optical cable connection phase, one public right of way application and one private right of way application are performed separately. This avoids a waiting period during a plurality of right of way applications, simplifies an application procedure, shortens construction duration, and improves construction efficiency. Because construction and excavation times are reduced, production costs can also be reduced. In the optical cable connection phase, after the protective cap 13 is detached from the optical cable connection module 10, the connection assembly 12 can be quickly connected to the user-side optical cable, to implement quick and reliable connection construction operations.

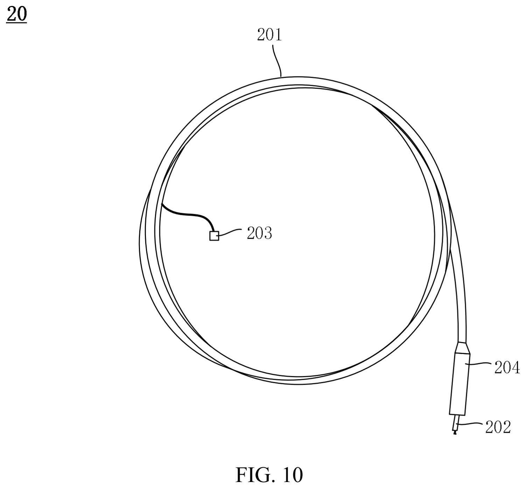

An embodiment of this application further provides a drop cable module 20. As shown in FIG. 10, the drop cable module 20 includes a drop cable 201 and a connection head 202. A wiring terminal 203 is disposed at one end of the drop cable 201, and the wiring terminal 203 is configured to connect to an indoor terminal. The connection head 202 is disposed at the other end of the drop cable 201, and the connection head 202 is configured to connect to a fiber distribution terminal 01. Specifically, the connection head 202 may be connected to the fiber distribution terminal 01 through the optical cable connection module 10 in the foregoing embodiment.

When the drop cable module 20 is connected to the fiber distribution terminal 01 through the optical cable connection module 10, the connection assembly 12 of the fiber distribution box 1 is connected to the connection head 202. Certainly, a type of the connection head 202 should adapt to a type of the connection assembly 12. In addition, the drop cable module 20 further includes a protective cylinder 204. When the connection head 202 is connected to the connection assembly 12, the protective cylinder 204 can be connected to the fiber distribution box 1 to protect the connection assembly 12 and the connection head 202.

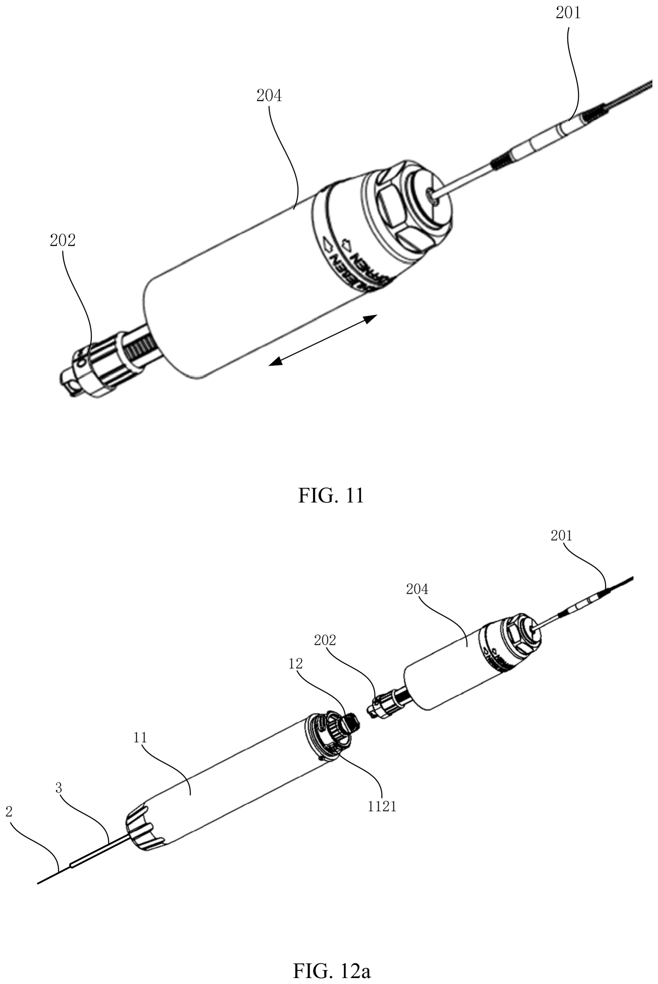

FIG. 11 shows a structure including the connection head 202, the protective cylinder 204, and a part of the drop cable 201. In an axial direction of the drop cable 201, the protective cylinder 204 may be movably connected to the connection head 202 relative to the connection head 202, and a direction along which the protective cylinder 204 can move is shown by an arrow.

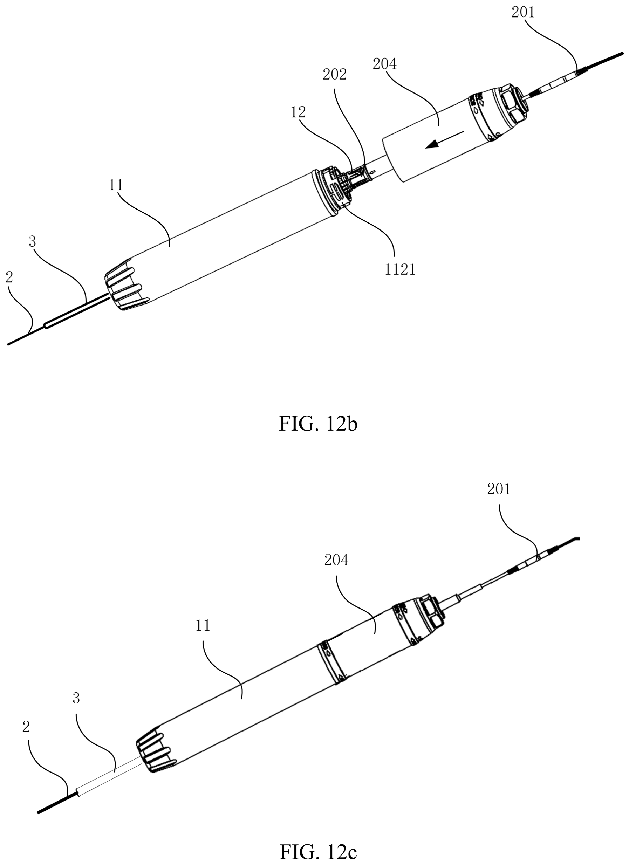

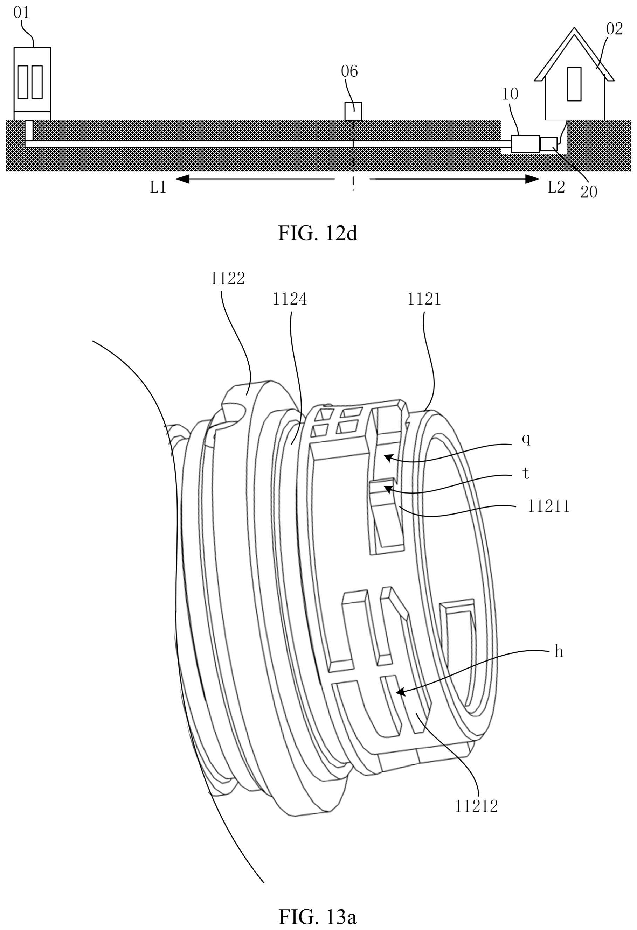

With reference to FIG. 11, refer to a diagram of a scenario of connection between the drop cable module 20 and the optical cable connection module 10 shown in FIG. 12a. After the protective cap 13 of the optical cable connection module 10 is detached, the connection assembly 12 is exposed. The connection head 202 of the drop cable module 20 is connected to the connection assembly 12, to obtain a structure shown in FIG. 12b. The protective cylinder 204 moves in an arrow direction shown in FIG. 12b, until the protective cylinder 204 moves relative to the connection head 202 to be connected to the connection end 1121 of the fiber distribution box 1, to obtain a structure shown in FIG. 12c. In a state shown in FIG. 12c, the protective cylinder 204 is connected to the connection end 1121, to form accommodation space that can accommodate the connection assembly 12 and the connection head 202, so as to protect body structures of the connection assembly 12 and the connection head 202 and connection therebetween. In this way, the fiber distribution box 1 is connected to the drop cable 201. It should be understood that, based on the scenario of the optical cable connection phase shown in FIG. 9c, for a state in which the fiber distribution box 1 is connected to the drop cable module 20, refer to FIG. 12d. In this case, optical cable home connection is completed after a burial pit is backfilled.

In embodiments of this application, the connection end 1121 of the fiber distribution box 1 can be connected to the protective cylinder 204 to protect the connection assembly 12 and the connection head 202. To prevent the protective cylinder 204 from being detached from the connection end 1121, as shown in FIG. 13a, a limiting apparatus is disposed at the connection end 1121 of the inner cylinder 112 of the fiber distribution box 1. Specifically, a first limiting member 11211 and a second limiting member 11212 are disposed at the connection end 1121. When the protective cylinder 204 is connected to the connection end 1121, the first limiting member 11211 may fit with the protective cylinder 204 to circumferentially limit the protective cylinder 204, and the second limiting member 11212 may fit with the protective cylinder 204 to axially limit the protective cylinder 204.

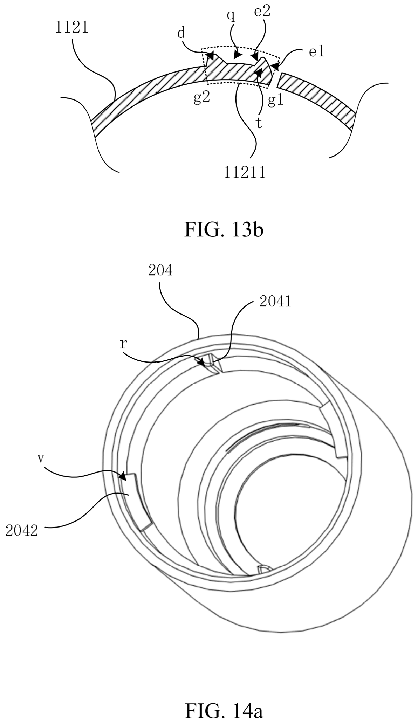

FIG. 13a shows a partial structure of one end that is of the inner cylinder 112 and at which the connection end 1121 is disposed. FIG. 13b shows a sectional view of a partial structure of the connection end 1121 having the first limiting member 11211. The connection end 1121 is, for example, in a cylindrical shape. The connection assembly 12 may pass through the connection end 1121 to be connected to the bare wire 21 in the inner cylinder 112. The first limiting member 11211 and the second limiting member 11212 are disposed at the connection end 1121 in a circumferential direction of the connection end 1121. For example, the first limiting member 11211 is of a cantilever structure, and has a fixed end g2 and a free end g1. The first limiting member 11211 extends in the circumferential direction of the connection end 1121, and the free end g1 is suspended. A first limiting protrusion t is disposed at the free end of the first limiting member 11211, and an auxiliary protrusion d is disposed on a side that is of the free end g1 and that faces the fixed end g2. A limiting notch q is formed between the first limiting protrusion t and the auxiliary protrusion d. The second limiting member 11212 is provided with a limiting slot h, and an extension direction of the limiting slot h is perpendicular to an axial direction of the connection end 1121. It should be understood that the axial direction of the connection end 1121 is also an axial direction of the fiber distribution box 1. Specifically, as shown in FIG. 13b, a first inclined surface e1 is formed on a side that is of the first limiting protrusion t and that faces away from the limiting notch q, and a second inclined surface e2 is formed on a side that is of the first limiting protrusion t and that faces the limiting notch q.

For example, two first limiting members 11211 are disposed, and two second limiting members 11212 are disposed. In the circumferential direction of the connection end 1121, the two first limiting members 11211 are centrosymmetrically distributed, and the two second limiting members 11212 are also centrosymmetrically distributed. Certainly, there may be another quantity and distribution manner of first limiting members 11211 and another quantity and distribution manner of second limiting members 11212, and a quantity and distribution manner of first limiting members 11211 may not correspond to a quantity and distribution manner of second limiting members 11212.

Refer to FIG. 13a and FIG. 13b together. The free end g1 of the first limiting member 11211 is free relative to the fixed end g2. In other words, when a force is applied to the free end g1, the free end g1 may swing relative to the fixed end g2. It may be considered that when a force is applied to the free end g1 of the first limiting member 11211, the first limiting member 11211 may deform relative to the connection end 1121.

Corresponding to the structure of the connection end 1121, FIG. 14a shows a structure of the protective cylinder 204. When the protective cylinder 204 is connected to the connection end 1121, the protective cylinder 204 is sleeved on an outer circumferential surface of the connection end 1121. To fit with the first limiting member 11211, a first limiting part 2041 is disposed on an inner wall of the protective cylinder 204. The first limiting part 2041 is a second limiting protrusion r, and the second limiting protrusion r protrudes from an inner surface of the protective cylinder 204. For example, the second limiting protrusion r is in a triangle-like shape. To fit with the second limiting member 11212, a second limiting part 2042 is disposed on the inner wall of the protective cylinder 204. For example, the second limiting part 2042 is a strip-shaped limiting bump v, and the limiting bump v protrudes from the inner surface of the protective cylinder 204 and circumferentially extends along the inner surface of the protective cylinder 204.

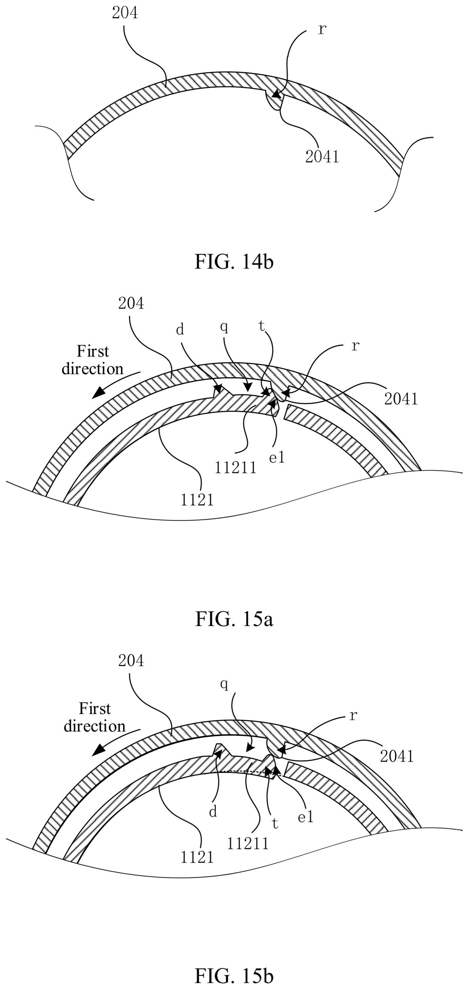

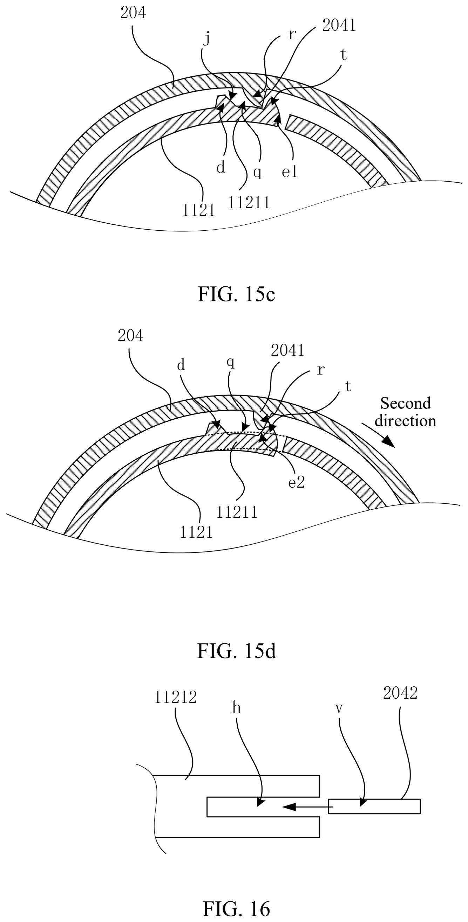

Based on the structure of the first limiting member 11211 in FIG. 13b and the structure of the first limiting part 2041 in FIG. 14b, FIG. 15a is a diagram of a structure of fitting between the first limiting member 11211 and the first limiting part 2041. When the connection end 1121 is connected to the protective cylinder 204, the protective cylinder 204 is sleeved on an outer surface of the connection end 1121. The protective cylinder 204 circumferentially rotates in a first direction, so that the protective cylinder 204 is rotated relative to the connection end 1121 in the direction from the free end g1 of the first limiting member 11211 toward the fixed end g2, until the second limiting protrusion r abuts against the first inclined surface e1 of the first limiting protrusion t. The protective cylinder 204 continues to be rotated in the first direction. As shown in FIG. 15b, the second limiting protrusion r slides along the first inclined surface e1 of the first limiting protrusion t, the second limiting protrusion r applies a force to the first limiting protrusion t, and the free end g1 of the first limiting member 11211 moves toward an axis of the connection end 1121. A dashed line indicates a position of the first limiting member 11211 before the first limiting member 11211 is subject to the force. The protective cylinder 204 continues to be rotated in the first direction, and the second limiting protrusion r may slide along the first inclined surface e1 of the first limiting protrusion t to enter the limiting notch q. After the force for rotating the protective cylinder 204 disappears, the second limiting protrusion r is located in the limiting notch q, and the first limiting member 11211 is restored to an original shape. The first limiting protrusion t and the auxiliary protrusion d can prevent the second limiting protrusion r from moving out of the limiting notch q in the circumferential direction of the connection end 1121, to circumferentially limit the protective cylinder 204. When the protective cylinder 204 needs to be detached from the connection end 1121, the protective cylinder 204 is reversely rotated based on FIG. 15c. For the reverse rotation, it may be considered that a rotation direction is a second direction. As shown in FIG. 15d, when the protective cylinder 204 is rotated to cause the second limiting protrusion r to abut against the second inclined surface e2 of the first limiting protrusion t, the protective cylinder 204 continues to be rotated in the second direction, and the second limiting protrusion r can slide out of the limiting notch q along the second inclined surface e2, so that circumferential limiting between the protective cylinder 204 and the connection end 1121 is released.

For fitting between the second limiting member 11212 and the second limiting part 2042, refer to FIG. 16. The second limiting member 11212 has a limiting slot h, and an extension direction of the limiting slot h is perpendicular to an axial direction of the protective cylinder 204. The second limiting part 2042 has a limiting bump v corresponding to the limiting slot h. When the protective cylinder 204 is sleeved on the connection end 1121, the limiting bump v and the limiting slot h are opposite to each other in the circumferential direction of the connection end 1121. A force is applied to the protective cylinder 204. In this case, the protective cylinder 204 is rotated relative to the connection end 1121 in the first direction, the limiting bump v enters the limiting slot h, and the limiting bump v fits with the limiting slot h, so that the protective cylinder 204 is not detached from the connection end 1121 in the axial direction. A direction of arrows shown in FIG. 16 may be considered as the first direction. When limiting between the second limiting member 11212 and the second limiting part 2042 is released, a force is applied to the protective cylinder 204, so that the protective cylinder 204 is rotated relative to the connection end 1121 in the second direction, and the limiting bump v moves out of the limiting slot h.

It should be understood that, the structure of fitting between the first limiting member 11211 and the first limiting part 2041 in the foregoing embodiment is associated with a structure of fitting between the second limiting member 11212 and the second limiting part 2042, to implement both circumferential limiting and axial limiting on the protective cylinder 204. In other words, when the protective cylinder 204 is rotated relative to the connection end 1121 in the first direction, the first limiting member 11211 may fit with the first limiting part 2041 for limiting, and the second limiting member 11212 may fit with the second limiting part 2042 for limiting. After the first limiting member 11211 fits with the first limiting part 2041, the second limiting member 11212 and the second limiting part 2042 are circumferentially locked. The second limiting member 11212 and the second limiting part 2042 can be unlocked only when limiting between the first limiting member 11211 and the first limiting part 2041 is released. Certainly, in some other possible implementations, the structure of fitting between the first limiting member 11211 and the first limiting part 2041 may not be associated with the structure of fitting between the second limiting member 11212 and the second limiting part 2042, and fitting for limiting is separately implemented.

With reference to FIG. 15a to FIG. 15d and FIG. 16, when the protective cylinder 204 is connected to and locked with the connection end 1121, the protective cylinder 204 may be limited and fastened to the connection end 1121 through circumferential fitting between the first limiting member 11211 and the first limiting part 2041 and axial fitting between the second limiting member 11212 and the second limiting part 2042, so that the protective cylinder 204 is not detached from the connection end 1121, so as to well protect connection between the connection assembly 12 and the connection head 202.

Based on the optical cable connection module 10 and the drop cable module 20, an embodiment of this application further provides an optical cable connection apparatus. The optical cable connection apparatus includes the optical cable connection module 10 and the drop cable module 20 provided in the foregoing embodiment. In a construction phase of optical cable laying construction, on-site fiber splicing and distribution are not necessary for the optical cable connection module 10, so that construction duration can be shortened, and construction costs for fiber splicing and the like can be reduced. When the optical cable connection module 10 is pre-buried underground, the connection assembly 12 is protected by the protective cap 13 and is not affected by a foreign object, thereby degrading difficulty in maintenance and improving reliability. In an optical cable connection phase, the optical cable connection module 10 can be quickly mounted to or detached from the drop cable module 20, to implement quick and reliable connection construction operations. The optical cable connection module 10 may be repeatedly connected to or detached from the drop cable module 20, thereby shortening construction duration and reducing costs. When right of way application is involved, only public right of way may be applied for in an optical cable construction phase, and only private right of way may be applied for in an optical cable connection phase. This avoids a waiting period during a plurality of right of way applications, and improves construction efficiency. In addition, reducing road excavation times can also reduce excavation construction costs.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical cable connection module (10), comprising a fiber distribution box (1) and an air-blown cable (2), wherein
the fiber distribution box (1) comprises a housing (11) and a connection assembly (12), wherein the connection assembly (12) is fastened to the housing (11) and is exposed from the housing (11), and the connection assembly (12) is configured to connect to a user-side optical cable; and
one end of the air-blown cable (2) is in the housing (11) and is connected to the connection assembly (12), and the other end of the air-blown cable (2) extends out of the housing (11) to connect to a fiber distribution terminal (01).

2. The optical cable connection module (10) according to claim 1, wherein the fiber distribution box (1) has a first connection compartment (C1) and a second connection compartment (C2); and the connection assembly (12) has a first connection terminal (121) in the first connection compartment (C1) and a second connection terminal (122) in the second connection compartment (C2), the first connection terminal (121) is connected to the air-blown cable (2), and the second connection terminal (122) is configured to connect to the user-side optical cable.

3. The optical cable connection module (10) according to claim 2, wherein the housing (11) comprises an outer casing (111) and an inner cylinder (112), the inner cylinder (112) is partially fastened inside the outer casing (111), the inner cylinder (112) has a first part inside the outer casing (111) and a second part outside the outer casing (111), the first connection compartment (C1) is formed between the first part of the inner cylinder (112) and the outer casing (111), and the connection assembly (12) is fastened to the inner cylinder (112).

4. The optical cable connection module (10) according to claim 3, wherein the inner cylinder (112) has a fiber spool area (P), the air-blown cable (2) has a bare core (21) spooled in the fiber spool area (P), and the bare core (21) is connected to the connection assembly (12).

5. The optical cable connection module (10) according to claim 3 or 4, wherein a first limiting member (11211) and a second limiting member (11212) are disposed on the inner cylinder (112); and
when the connection assembly (12) is connected to the user-side optical cable, the first limiting member (11211) is configured to fit with the user-side optical cable to circumferentially limit the user-side optical cable, and the second limiting member (11212) is configured to fit with the user-side optical cable to axially limit the user-side optical cable.

6. The optical cable connection module (10) according to any one of claims 2 to 4, wherein the fiber distribution box (1) further comprises a protective cap (13), the protective cap (13) is detachably connected to the housing (11), and the second connection compartment (C2) is formed between the protective cap (13) and the housing (11).

7. The optical cable connection module (10) according to claim 5, wherein a sealing member (14) is disposed between the housing (11) and a protective cap (13).

8. The optical cable connection module (10) according to any one of claims 1 to 7, wherein the optical cable connection module (10) further comprises a connection tube (3) outside the housing (11), the connection tube (3) is sleeved on the air-blown cable (2), and the connection tube (3) is configured to connect to an air-blown tube.

9. The optical cable connection module (10) according to any one of claims 1 to 8, wherein the connection assembly (12) comprises a connector; or
the connection assembly (12) comprises a connector and an adapter, wherein the connector connects the air-blown cable (2) and the adapter, and the adapter is configured to connect to the user-side optical cable.

10. A drop cable module (20), comprising: a drop cable (201), and a connection head (202) and a wiring terminal (203) that are respectively disposed at two ends of the drop cable (201), wherein the connection head (202) is configured to connect to a fiber distribution terminal (01) through a fiber distribution box (1), and the wiring terminal (203) is configured to connect to an access terminal box.

11. The drop cable module (20) according to claim 10, wherein the drop cable module (20) further comprises a protective cylinder (204), the protective cylinder (204) is movably sleeved outside the connection head (202), and when the connection head (202) is connected to a connection assembly (12), the protective cylinder (204) is configured to connect to the fiber distribution box (1) through fitting.

12. The drop cable module (20) according to claim 11, wherein a first limiting member (11211) and a second limiting member (11212) are disposed on the fiber distribution box (1), and a first limiting part (2041) and a second limiting part (2042) are disposed in the protective cylinder (204); and
when the connection head (202) is connected to the connection assembly (12), the first limiting part (2041) fits with the first limiting member (11211) to circumferentially limit the protective cylinder (204), and the second limiting part (2042) fits with the second limiting member (11212) to axially limit the protective cylinder (204).

13. The drop cable module (20) according to claim 12, wherein the first limiting member (11211) is of a cantilever structure, the first limiting member (11211) has a fixed end (g2) fastened to the fiber distribution box (1) and a suspended free end (g1), and the first limiting member (11211) extends in a circumferential direction of the fiber distribution box (1); and a first limiting protrusion (t) protruding from an outer surface of the fiber distribution box (1) is disposed at the free end (g1) of the first limiting member (11211), a limiting notch (q) is formed between the fixed end (g2) of the first limiting member (11211) and the first limiting protrusion (t), and a first inclined surface (e1) is formed on a side that is of the first limiting protrusion (t) and that faces away from the limiting notch (q);
the first limiting part (2041) comprises a second limiting protrusion (r), and the second limiting protrusion (r) is disposed on an inner surface of the protective cylinder (204); and
when the first limiting part (2041) fits with the first limiting member (11211) for limiting, the protective cylinder (204) is sleeved outside the fiber distribution box (1), to cause the protective cylinder (204) to circumferentially rotate relative to the fiber distribution box (1) in a first direction, and the second limiting protrusion (r) to abut against the first inclined surface (e1) of the first limiting protrusion (t) and slide toward the limiting notch (q) along the first inclined surface (e1) to enter the limiting notch (q).

14. The drop cable module (20) according to claim 13, wherein a second inclined surface (e2) is formed on a side that is of the first limiting protrusion (t) and that faces the limiting notch (q); and
when limiting between the first limiting part (2041) and the first limiting member (11211) is released, the protective cylinder (204) is caused to circumferentially rotate relative to the fiber distribution box (1) in a second direction, and the second limiting protrusion (r) is caused to abut against the second inclined surface (e2) of the first limiting protrusion (t) and slide in a direction away from the limiting notch (q) to move out of the limiting notch (q), wherein the second direction is opposite to the first direction.

15. The drop cable module (20) according to any one of claims 12 to 14, wherein the second limiting member (11212) comprises a limiting slot (h) on the outer surface of the fiber distribution box (1), and the limiting slot (h) extends in the circumferential direction of the fiber distribution box (1);
the second limiting part (2042) comprises a limiting bump (v), and the limiting bump (v) is disposed on the inner surface of the protective cylinder (204); and
when the second limiting part (204) fits with the second limiting member (11212) for limiting, the protective cylinder (204) is sleeved outside the fiber distribution box (1), to cause the protective cylinder (204) to circumferentially rotate relative to the fiber distribution box (1) in the first direction, and the limiting bump (v) to slide into the limiting slot (h).

16. An optical cable connection apparatus, comprising the optical cable connection module (10) according to any one of claims 1 to 9 and the drop cable module (20) according to any one of claims 10 to 15.
